# EUROPÄISCHE PATENTANMELDUNG

(11) **EP 2 039 629 A2**
(43) Veröffentlichungstag der Anmeldung: **25.03.2009**
(21) Anmeldenummer: 08021251.7
(22) Anmeldetag: 26.11.2007
(51) Int. Cl.: B65G 21/04, B65G 39/20

(54) **Förderanlage zum Transport von Gütern**

(30) Priorität: 24.07.2007 AT 11712007
(62) Teilanmeldung aus: 07450209.7
(71) Anmelder: Innova Patent GmbH, 6960 Wolfurt (AT)
(72) Erfinder: Trieb, Herbert, 6911 Lochau (AT)
(74) Vertreter: Hehenberger, Reinhard

(57) **Zusammenfassung**

Förderanlage zum Transport von Gütern mit einem Förderband (1), welches an den beiden Enden der Anlage über Umlenktrommeln geführt ist und welches an der Unterseite von quer zur Bewegungsrichtung des Förderbandes (1) ausgerichteten und in Bewegungsrichtung des Förderbandes (1) voneinander im Abstand befindlichen Tragbalken (2) befestigt ist, wobei an den beiden seitlichen Enden der Tragbalken (2) jeweils Laufrollen gelagert sind, welche auf zwei längs der Anlage vorgesehenen Paaren von Tragseilen bzw. Tragschienen, die dem vorlaufenden Trum und dem rücklaufenden Trum des Förderbandes (1) zugeordnet sind, abrollen, wobei zumindest bei einem Teil der Tragbalken (2) zwischen der Unterseite der Tragbalken (2) und der Oberseite des Förderbandes (1) eine aus einem elastischen Material bestehende Dichtungsleiste (3) vorgesehen ist, und wobei das Förderband (1) und der betreffende Tragbalken (2) mittels Schraubbolzen (4), deren Kopf (41) in eine im Förderband (1) befindliche Ausnehmung (13) eingesetzt ist, miteinander verbunden sind. Dabei sind die Tragbalken (2) an ihren dem Förderband (1) abgewandten Seiten mit Ausnehmungen (21) ausgebildet, in welche die den Schraubbolzen (4) zugeordneten Muttern (42) gegenüber der Oberfläche der Tragbalken (2) versenkt eingesetzt sind.

## Beschreibung

Die gegenständliche Erfindung betrifft eine Förderanlage zum Transport von Gütern mit einem Förderband, welches an den beiden Enden der Anlage über Umlenktrommeln geführt ist und welches an der Unterseite von quer zur Bewegungsrichtung des Förderbandes ausgerichteten und in Bewegungsrichtung des Förderbandes voneinander im Abstand befindlichen Tragbalken befestigt ist, wobei an den beiden seitlichen Enden der Tragbalken jeweils Laufrollen gelagert sind, welche auf zwei längs der Anlage vorgesehenen Paaren von Tragseilen bzw. Tragschienen, die dem vorlaufenden Trum und dem rücklaufenden Trum des Förderbandes zugeordnet sind, abrollen und wobei zumindest bei einem Teil der Tragbalken zwischen der Unterseite der Tragbalken und der Oberseite des Förderbandes eine aus einem elastischen Material bestehende Dichtungsleiste vorgesehen ist.

Bei derartigen Förderanlagen, welche z.B. aus der DE 10348516 A1 bekannt sind, ist das Förderband an der Unterseite der Tragbalken dadurch befestigt, dass über die Länge der Tragbalken mehrere im Abstand voneinander befindliche Schraubbolzen vorgesehen sind, welche die Tragbalken und das Förderband durchsetzen und deren von der Oberseite der Tragbalken abragende Enden mittels Muttern verschraubt sind.

Bei dieser Art der Befestigung besteht jedoch das Problem, dass die verschraubten Enden der Schraubmuttern durch das Fördergut so stark beschädigt werden können, dass die Schrauben nicht mehr gelöst werden können. Der gegenständlichen Erfindung liegt somit die Aufgabe zugrunde, eine solche Anordnung der Schrauben zu schaffen, dass diese Schwierigkeit vermieden wird. Diese Aufgabe wird erfindungsgemäß dadurch gelöst, dass die Tragbalken an ihren dem Förderband abgewandten Seiten mit Ausnehmungen ausgebildet sind, in welche die den Schraubbolzen zugeordneten Muttern gegenüber der Oberfläche der Tragbalken versenkt eingesetzt sind.

Vorzugsweise ist die Unterseite der Dichtungsleiste mit der Oberseite des Förderbandes durch Klebung verbunden. Weiters kann die Dichtungsleiste aus einem elastischen Material mit einer metallischen Verstärkungsleiste ausgebildet sein. Dabei befindet sich insbesondere die Verstärkungsleiste an der an den betreffenden Tragbalken anliegenden Seite der Dichtungsleiste.

Der Gegenstand der Erfindung ist nachstehend anhand von in den Zeichnungen dargestellten Ausführungsbeispielen näher erläutert. Es zeigen:
- FIG.1: einen Abschnitt einer Transportanlage, in axonometrischer Darstellung;
- FIG.2: einen Abschnitt des Förderbandes der Förderanlage gemäß FIG.1, in axonometrischer Darstellung;
- FIG.3: einen Abschnitt des Förderbandes, in einem Längsschnitt;
- FIG.4, FIG.4a: Ausführungsbeispiele der Befestigung des Förderbandes an einem Tragbalken, jeweils in Querschnitten.

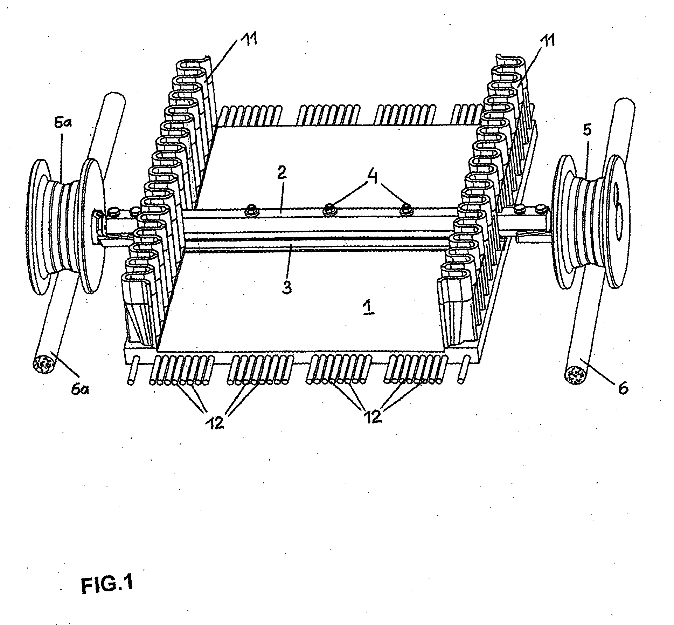

In FIG.1 ist ein Abschnitt des Förderbandes 1 in einer Förderanlage zum Transport von Gütern dargestellt. Wie daraus ersichtlich ist, ist das Förderband 1 an seinen beiden Seitenrändern mit Wellkanten 11 ausgebildet, durch welche es ermöglicht wird, dieses an den beiden Enden der Förderanlage über Umlenktrommeln zu führen. Wie daraus weiters ersichtlich ist, ist das Förderband 1 mit einer Vielzahl von dicht nebeneinander befindlichen Verstärkungsseilen 12 ausgebildet, aufgrund welcher dieses eine große Tragfähigkeit aufweist. Das Förderband 1 ist an der Unterseite von sich quer zu dessen Bewegungsrichtung erstreckenden Tragbalken 2 befestigt, wobei sich zwischen dem Förderband 1 und den Tragbalken 2 jeweils eine elastische Dichtungsleiste 3 befindet. Die Befestigung des Förderbandes 1 an den Tragbalken 2 erfolgt z.B. mittels das Förderband 1 und die Tragbalken 2 durchsetzender Schraubbolzen 4. Durch die zwischen dem Förderband 1 und den Tragbalken 2 befindlichen Dichtungsleisten 3 wird vermieden, dass sich zwischen dem Förderband 1 und den Tragbalken 2 jeweils Spalte ausbilden, in welche Fördergut eindringt, wodurch das Förderband 1 einem erhöhten Verschleiß unterliegt.

An den beiden Enden der Tragbalken 2 befinden sich Laufrollen 5 und 5a, welche längs eines Paares von Tragseilen 6 und 6a bzw. von Tragschienen geführt sind. Dabei sind sowohl dem mit Transportgut beladenen Trum des Förderbandes 1 als auch dem unbeladenen Trum des Förderbandes 1 jeweils ein Paar von Tragseilen 6 und 6a bzw. von Tragschienen zugeordnet, längs welcher das Förderband 1 zwischen den in den Endstationen befindlichen Umlenk- bzw. Antriebstrommeln im Umlauf bewegt wird.

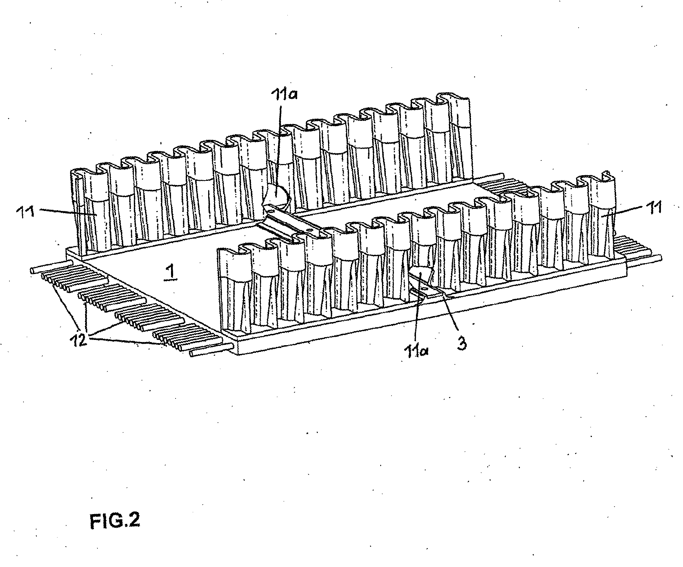

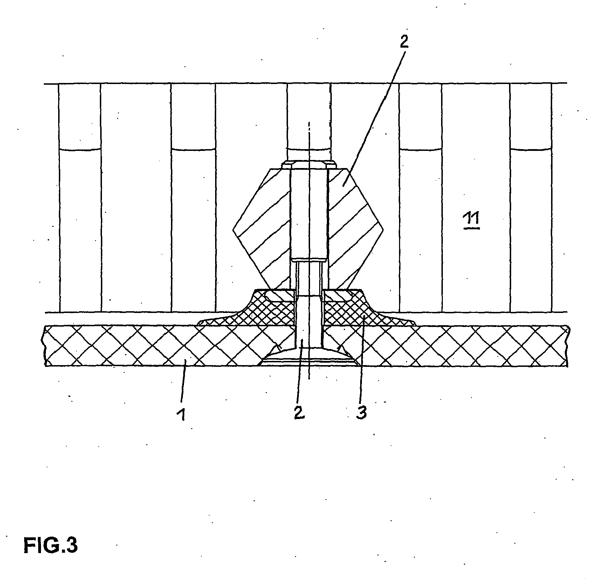

Aus den FIG.2 und FIG.3 ist ersichtlich, dass die seitlichen Wellkanten 11 mit Ausnehmungen 11a für die Tragbalken 2 ausgebildet sind und dass sich die Dichtungsleisten 3 an der Oberseite des Förderbandes 1 befinden.

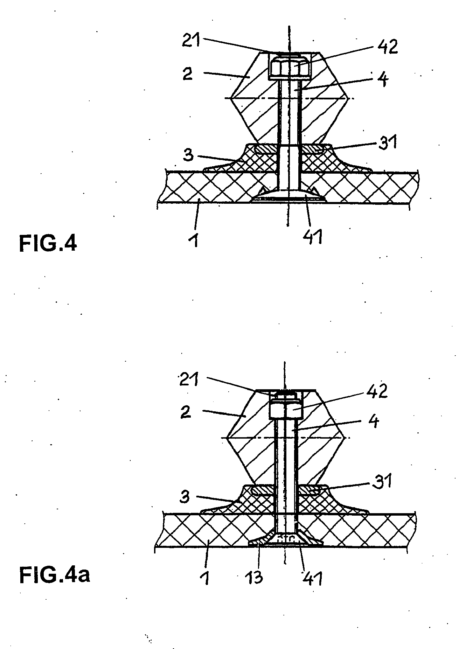

Wie dies aus den FIG.4 und FIG.4a ersichtlich ist, ist das Förderband 1 mit Nuten 13 ausgebildet, in welche die Köpfe 41 der Schraubbolzen 4 eingesetzt sind. Weiters sind die Tragbalken 2 an ihrer Oberseite mit Ausnehmungen 21 ausgebildet, in welche die den Schraubbolzen 4 zugeordneten Schraubmuttern 42 eingesetzt sind, wobei die Schraubbolzen 4 unterhalb der oberen Fläche der Tragbalken 2 enden. Somit ist berücksichtigt, dass durch das vom Förderband 1 transportierte Fördergut die oberen Enden der Schraubbolzen 4 einem starken Verschleiß unterliegen, weswegen solche konstruktive Gestaltungen gewählt werden müssen, durch welche gewährleistet ist, dass die Schraubbolzen 4 jederzeit wieder gelöst werden können, sobald dies für den Austausch von Tragbalken 2 erforderlich ist.
Auch bei dieser Art der Befestigung des Förderbandes 1 an den Tragbalken 2 unter Zwischenlage der Dichtungsleiste 3 wird die Ausbildung von Spalten zwischen dem Förderband 1 und den Tragbalken 2 vermieden. Aufgrund der Schraubverbindungen können die Tragbalken 2 in einfacher Weise vom Förderband 1 gelöst werden.

Weiters sind die Dichtungsleisten 3 an ihrer den Tragbalken 2 zugewandten Seite mit Verstärkungsleisten 31 ausgebildet, welche mit den Dichtungsleisten 3 verklebt sind.

## Patentansprüche

1. Förderanlage zum Transport von Gütern mit einem Förderband (1), welches an den beiden Enden der Anlage über Umlenktrommeln geführt ist und welches an der Unterseite von quer zur Bewegungsrichtung des Förderbandes (1) ausgerichteten und in Bewegungsrichtung des Förderbandes (1) voneinander im Abstand befindlichen Tragbalken (2) befestigt ist, wobei an den beiden seitlichen Enden der Tragbalken (2) jeweils Laufrollen (5, 5a) gelagert sind, welche auf zwei längs der Anlage vorgesehenen Paaren von Tragseilen (6,6a) bzw. Tragschienen, die dem vorlaufenden Trum und dem rücklaufenden Trum des Förderbandes (1) zugeordnet sind, abrollen, wobei zumindest bei einem Teil der Tragbalken (2) zwischen der Unterseite der Tragbalken (2) und der Oberseite des Förderbandes (1) eine aus einem elastischen Material bestehende Dichtungsleiste (3) vorgesehen ist, und wobei das Förderband (1) und der betreffende Tragbalken (2) mittels Schraubbolzen (4), deren Kopf (41) in eine im Förderband (1) befindliche Ausnehmung (13) eingesetzt ist, miteinander verbunden sind, **dadurch gekennzeichnet, dass** die Tragbalken (2) an ihren dem Förderband (1) abgewandten Seiten mit Ausnehmungen (21) ausgebildet sind, in welche die den Schraubbolzen (4) zugeordneten Muttern (42) gegenüber der Oberfläche der Tragbalken (2) versenkt eingesetzt sind.

2. Förderanlage nach Patentanspruch 1, **dadurch gekennzeichnet, dass** die Unterseite der Dichtungsleiste (3) mit der Oberseite des Förderbandes (1) durch Klebung verbunden ist.

3. Förderanlage nach einem der Patentansprüche 1 und 2, **dadurch gekennzeichnet, dass** die Dichtungsleiste (3) aus einem elastischen Material mit einer metallischen Verstärkungsleiste (31) ausgebildet ist.

4. Förderanlage nach Patentanspruch 3, **dadurch gekennzeichnet, dass** sich die Verstärkungsleiste (31) an der an den betreffenden Tragbalken (2) anliegenden Seite der Dichtungsleiste (3) befindet.
